# EUROPEAN PATENT APPLICATION

(11) **EP 4 813 929 A1**
(43) Date of publication of application: **30.09.2026**
(21) Application number: 24893980.3
(22) Date of filing: 05.11.2024
(51) Int. Cl.: C02F 1/26, B01D 3/00, B01D 11/04

(54) **METHOD AND DEVICE FOR RECOVERING OIL FROM OIL-CONTAINING WASTE LIQUID**

(30) Priority: 21.11.2023 JP 2023197548
(71) Applicant: Kurita Water Industries Ltd., Tokyo 164-0001 (JP)
(72) Inventor: YOSHIDA, Tsuneyuki, Tokyo 164-0001 (JP)
(74) Representative: Hoffmann Eitle
(86) International application number: PCT/JP2024/039219
(87) International publication number: WO 2025/109988

(57) **Abstract**

This method for recovering oil from an oil-containing waste liquid includes an extraction step of extracting an oil-containing waste liquid using a solvent to transfer oil in the oil-containing waste liquid to the solvent, a separation step of separating the solvent containing the extracted oil and the waste liquid, and an oil recovery step of separating and recovering the oil from the separated solvent containing the oil, the method for recovering oil being characterized in that the solvent is n-hexane, the oil concentration in the oil-containing waste liquid supplied to the extraction step is 1000 mg/L to 5000 mg/L, the volume ratio (solvent/waste liquid ratio) of the solvent to the oil-containing waste liquid is 0.01 to 0.05, and the oil concentration in the solvent containing the oil separated in the separation step is 4 mass% or more. Provided is a method for recovering oil from an oil-containing waste liquid, the method making it possible to efficiently separate and recover oil from the oil-containing waste liquid by a solvent extraction method.

## Description

### Technical Field

The present invention relates to a method and a device for recovering oil from an oil-containing waste liquid, and particularly relates to a method and a device for recovering oil from an oil-containing waste liquid using solvent extraction.

### Background Art

Water treatment for separating and recovering oil from an oil-containing waste liquid generally involves separation using separation weirs (oil traps) that takes advantage of the fact that oil floats on water, and flotation treatment using micro air or micro air with chemicals (for example, Patent Document 1). Furthermore, a method of distributing oil to the solvent side by solvent extraction using a solvent and a mixer-settler or the like, and volatilizing the solvent to recover oil can also be considered.

Oil separated by such methods has high energy content and utilization value. Additionally, since using the separated and recovered oil as an energy source also leads to waste reduction, waste energy recovery, including waste power generation using oil, is expected to become increasingly important for establishing a recycling-oriented society in the future.

### Related Art Document

### Patent Document

Patent Document 1: Japanese Patent Application Laid-Open No. 2021-171748

### SUMMARY OF THE INVENTION

### Problem to be Solved by the Invention

In terms of conventional oil-water separation technologies, in flotation treatment, components other than oil, namely SS components other than oil contained in wastewater, chemical-derived components, moisture, and the like, are also mixed into the components separated by flotation. Therefore, processes such as purification using centrifugal separation or the like to remove these contaminants are required in order to separate only oil for use as fuel or the like.

In the separation and recovery of oil through solvent extraction, the solvent used for extraction has no polarity, so impurities such as hydrophilic substances like ions are not incorporated, making it a suitable method for using recovered oil. However, there are hardly any examples of applying solvent extraction to the wastewater treatment field, and currently there is no knowledge regarding the treatment conditions for application.

The present invention aims to provide a method and a device for recovering oil from an oil-containing waste liquid, that are capable of efficiently separating and recovering oil from an oil-containing waste liquid by a solvent extraction method.

### Means for Solving the Problem

The inventor of the present invention conducted extensive studies in order to solve the above problem and found that by controlling the oil concentration of the oil-containing waste liquid supplied to solvent extraction and the volume ratio of the solvent used for extraction to the oil-containing waste liquid to appropriate values, oil can be efficiently separated and recovered from the oil-containing waste liquid by solvent extraction.

The present invention has the following as its gist.
[1] A method for recovering oil from an oil-containing waste liquid includes: an extraction step of transferring oil in the oil-containing waste liquid to a solvent by performing extraction treatment on the oil-containing waste liquid with the solvent; a separation step of separating the solvent containing the extracted oil from the waste liquid; and an oil recovery step of separating and recovering oil from the separated solvent containing oil, wherein the solvent is n-hexane, an oil concentration in the oil-containing waste liquid supplied to the extraction step is 1000 mg/L to 5000 mg/L, a volume ratio of the solvent to the oil-containing waste liquid (solvent/waste liquid ratio) is 0.01 to 0.05, and an oil concentration in the solvent containing oil, which has been separated in the separation step, is 4 mass% or more.
[2] The method for recovering oil from an oil-containing waste liquid according to [1], wherein in the oil recovery step, the oil is separated from the solvent containing oil by heated distillation to recover the solvent, and the recovered solvent is reused in the extraction step.
[3] The method for recovering oil from an oil-containing waste liquid according to [2], wherein in separation by heated distillation, heat possessed by the separated solvent or oil is used for heating the solvent containing oil using a heat exchanger or a heat pump.
[4] The method for recovering oil from an oil-containing waste liquid according to any one of [1] to [3], further including a concentration step of concentrating the oil-containing waste liquid or a dilution step of diluting the oil-containing waste liquid prior to the extraction step.
[5] The method for recovering oil from an oil-containing waste liquid according to any one of [1] to [4], wherein the oil-containing waste liquid is any one of a waste liquid from a parts manufacturing factory for automobiles containing mineral oil, an aqueous cutting waste liquid, a waste liquid from a papermaking or paper pulp factory containing turpentine oil, and a waste liquid from an oil refinery, a food and beverage factory, or a food service industry business containing animal and vegetable oils.
[6] A device for recovering oil from an oil-containing waste liquid includes: extraction means for transferring oil in the oil-containing waste liquid to a solvent by performing extraction treatment on the oil-containing waste liquid with the solvent; separation means for separating the solvent containing the extracted oil from the waste liquid; and oil recovery means for separating and recovering oil from the separated solvent containing oil, wherein the solvent is n-hexane, an oil concentration in the oil-containing waste liquid supplied to the extraction means is 1000 mg/L to 5000 mg/L, a volume ratio of the solvent to the oil-containing waste liquid (solvent/waste liquid ratio) is 0.01 to 0.05, and an oil concentration in the solvent containing oil, which is separated by the separation means, is 4 mass% or more.
[7] The device for recovering oil from an oil-containing waste liquid according to [6], wherein the oil recovery means is means for separating the oil from the solvent containing oil by heated distillation, and the device includes liquid supply means for supplying the solvent from which oil has been separated by the oil recovery means to the extraction means.
[8] The device for recovering oil from an oil-containing waste liquid according to [7], including a heat exchanger or a heat pump for heating the solvent containing oil using heat possessed by the solvent or the oil separated by the heated distillation.
[9] The device for recovering oil from an oil-containing waste liquid according to any one of [6] to [8], further including concentration means for concentrating the oil-containing waste liquid or dilution means for diluting the oil-containing waste liquid at a stage before the extraction means.
[10] The device for recovering oil from an oil-containing waste liquid according to any one of [6] to [9], wherein the oil-containing waste liquid is any one of a waste liquid from a parts manufacturing factory for automobiles containing mineral oil, an aqueous cutting waste liquid, a waste liquid from a papermaking or paper pulp factory containing turpentine oil, and a waste liquid from an oil refinery, a food and beverage factory, or a food service industry business containing animal and vegetable oils.

### Effects of the Invention

According to the present invention, oil can be efficiently separated and recovered from an oil-containing waste liquid by solvent extraction.

According to the present invention, oil in an oil-containing waste liquid that inhibits wastewater treatment can be significantly reduced, and high-purity oil can be recovered and effectively reused as an energy source in various fields. Further, according to the present invention, the amount of waste such as sludge containing a large amount of oil that has been treated as waste so far can be significantly reduced.

Therefore, the industrial utilization value of the present invention is extremely high.

### BRIEF DESCRIPTION OF THE DRAWINGS

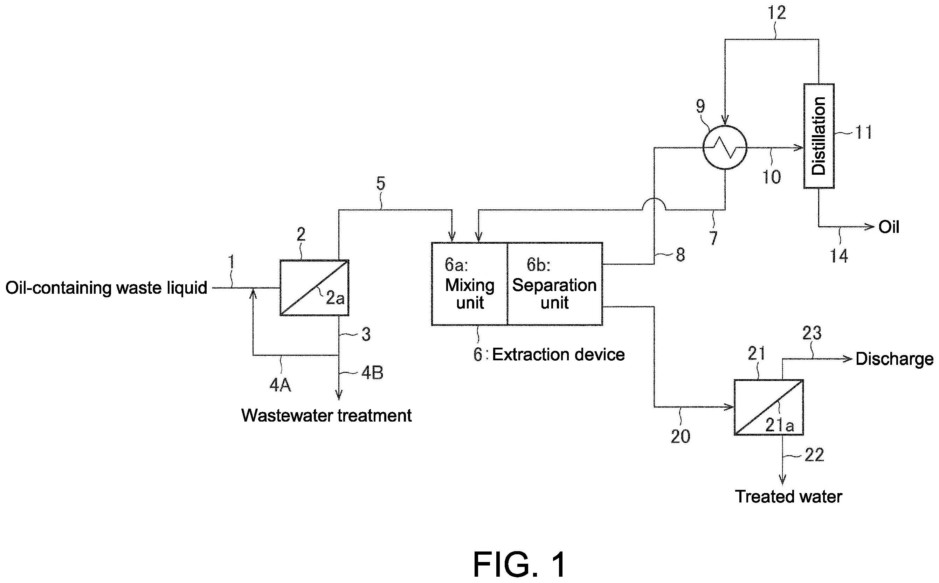

[FIG. 1] FIG. 1 is a flow diagram showing a method and a device for recovering oil from an oil-containing waste liquid according to an embodiment of the present invention.

### DESCRIPTION OF THE EMBODIMENTS

Prior to describing embodiments of a method and a device for recovering oil from an oil-containing waste liquid according to the present invention, a mechanism of solvent extraction in the present invention will be described first.

An oil-containing waste liquid normally contains oil sufficient to supply energy above a level required for heated distillation in the case where, after solvent extraction, the solvent is evaporated from the solvent containing oil by heated distillation to separate the oil in an oil recovery step.

On the other hand, in the case of considering a system that uses n-hexane as an extraction solvent, extracts oil from an oil-containing waste liquid by solvent extraction, evaporates the n-hexane used for extraction to separate and recover the residual oil, recovers the evaporated n-hexane by natural cooling (air cooling) for repeated use in extraction, and uses the recovered oil as fuel (energy source), the energy for evaporating n-hexane is considered to occupy most of the energy consumption (however, energy consumption other than that for solvent evaporation includes pump power for continuous processing, solvent loss, and the like).

Therefore, from the viewpoint of energy balance, the following formula needs to be established.

Consumed energy (amount of heat for heating n-hexane containing oil up to the boiling point and further evaporating all n-hexane) < acquired energy (amount of heat obtained by burning the recovered oil)

In the case where consumed energy is electricity (100% efficiency) and acquired energy is also electricity (efficiency for power generation from oil is about 25%), from the basic thermal information of n-hexane and oil shown in Table 1 below, as shown in Table 2 below, the oil concentration in n-hexane containing extracted oil needs to be 4 mass% or above.

**[Table 1]**

| Table 1 Various Basic Thermal Information | |
|---|---|
| | J/g |
| n-hexane evaporation heat (boiling point 67°C) | 335 |
| Oil combustion heat | About 40000 |
| Specific heat of n-hexane | 1.88 |
| Specific heat of oil | About 2.0 |

**[Table 2]**

| Table 2 Energy Balance | | | | | | | |
|---|---|---|---|---|---|---|---|
| Theoretical value | | | | | | | |
| Oil (g) | n-hexane (g) | Heating (40°C up) (J) | Evaporation heat (J) | Heating+ evaporation heat Total (J) | Required electricity amount (100% efficiency) (Wh) | Combustion heat (acquired energy) (J) | Acquired electricity amount (25% efficiency) (Wh) |
| 1 | 99 | 7525 | 33165 | 40690 | 11.30 | 40000 | 2.8 |
| 2 | 98 | 7530 | 32830 | 40360 | 11.21 | 80000 | 5.6 |
| 3 | 97 | 7534 | 32495 | 40029 | 11.12 | 120000 | 8.3 |
| 4 | 96 | 7539 | 32160 | 39699 | 11.03 | 160000 | 11.1 |
| 5 | 95 | 7544 | 31825 | 39369 | 10.94 | 200000 | 13.9 |
| 6 | 94 | 7549 | 31490 | 39039 | 10.84 | 240000 | 16.7 |
| 7 | 93 | 7554 | 31155 | 38709 | 10.75 | 280000 | 19.4 |
| 8 | 92 | 7558 | 30820 | 38378 | 10.66 | 320000 | 22.2 |
| 9 | 91 | 7563 | 30485 | 38048 | 10.57 | 360000 | 25.0 |
| 10 | 90 | 7568 | 30150 | 37718 | 10.48 | 400000 | 27.8 |

On the other hand, when a large amount of oil or the like dissolves into the solvent during solvent extraction, the specific gravity and viscosity of the obtained mixture of solvent and oil increase, and as a result, solid matter and water tend to mix into the mixture, making it difficult to extract and separate only pure oil from the oil-containing waste liquid.

Considering these, limiting the range of extracted oil concentration in the solvent, from which oil has been extracted, is effective for efficiently extracting oil from the oil-containing waste liquid to the solvent side.

From the above, by performing pretreatment such as concentration and dilution as required to set the oil concentration range in the oil-containing waste liquid supplied for extraction within a predetermined range, limiting the amount of solvent used, and further setting the oil concentration in the solvent containing the extracted oil to a predetermined value or more, the separability between the solvent and water improves, making it possible to keep the loss of solvent to the water side at a certain amount or less. In addition, the appropriate size of the oil extraction equipment relative to the amount of extracted oil is determined, enabling efficient extraction of oil into the solvent.

Based on such a mechanism, according to the present invention, the oil concentration of the oil-containing waste liquid supplied for extraction and the volume ratio of the solvent to the oil-containing waste liquid at this oil concentration (hereinafter, may be simply referred to as "solvent/waste liquid ratio") are set within predetermined ranges, and the oil concentration in the solvent containing the extracted oil is set to a predetermined value or more, thereby efficiently performing solvent extraction.

Furthermore, the separated and recovered oil can be efficiently and effectively used as an energy source.

In the present invention, the oil concentration in the oil-containing waste liquid supplied for solvent extraction is 1000 mg/L to 5000 mg/L.

In the case where the oil concentration of the oil-containing waste liquid is less than 1000 mg/L, the recovered oil to be used as an energy source for heated distillation of the solvent (n-hexane) after extraction is insufficient.

On the other hand, in the case where the oil concentration exceeds 5000 mg/L, as described above, the increase in specific gravity and viscosity of the mixture of the solvent, from which oil has been extracted, and oil makes it difficult to recover high-purity oil and separate oil after extraction, and the loss of solvent also increases.

From such a viewpoint, the oil concentration in the oil-containing waste liquid supplied for solvent extraction is preferably 1000 mg/L to 3000 mg/L, and more preferably 1200 mg/L to 2500 mg/L.

Further, in the present invention, the solvent (n-hexane) and the oil-containing waste liquid are supplied for solvent extraction such that the solvent/waste liquid ratio is 0.01 to 0.05.

In the case where the solvent/waste liquid ratio is less than 0.01, the amount of solvent used for extraction is too small to perform efficient oil extraction, and oil remains on the oil-containing waste liquid side.

On the other hand, in the case where the solvent/waste liquid ratio exceeds 0.05, the amount of solvent used for extraction is too large to be economical, and the oil concentration in n-hexane becomes low, which is not preferable from the viewpoint of increasing the size of the extraction device.

From such a viewpoint, the solvent/waste liquid ratio is preferably 0.02 to 0.04, and more preferably 0.025 to 0.03.

In the present invention, the oil concentration of the solvent after extracting oil from the oil-containing waste liquid is set to 4 mass% or more.

Therefore, in the case where extraction is performed using n-hexane according to the present invention, the oil concentration of n-hexane after extraction is 4 mass% or more, preferably 4 mass% to 12 mass%, and more preferably 4 mass% to 7 mass%, which is preferable from the viewpoints of oil separation efficiency and thermal energy efficiency in solvent regeneration.

Hereinafter, embodiments of a method and a device for recovering oil from an oil-containing waste liquid according to the present invention, which are performed by controlling the oil concentration of such oil-containing waste liquid and the solvent/waste liquid ratio, will be described with reference to FIG. 1.

However, the present invention is not limited to the following description in any way, and can be implemented with various modifications within the scope of the gist of the present invention.

FIG. 1 is a flow diagram showing a method and a device for recovering oil from an oil-containing waste liquid according to an embodiment of the present invention.

The oil-containing waste liquid to be treated in the present invention is a water-based waste liquid with a water content of 85 mass% or more, and examples include concentrated oil-containing waste liquids generated from petroleum processes, steel rolling processes, papermaking or paper pulp manufacturing, metal cutting processes, food manufacturing, leather manufacturing, kitchens, sewage systems, and the like. Specific examples include aqueous cutting waste liquid, turpentine oil-containing wastewater discharged from papermaking or pulp factories, and food wastewater, but are not limited to these.

The oil in the oil-containing waste liquid may be either mineral oil or animal and vegetable oils.

The oil concentrations of these oil-containing waste liquids are usually about 0.05 mass% to 1 mass% (500 mg/L to 10000 mg/L). Therefore, in the case where the oil concentration of the oil-containing waste liquid to be treated in the present invention is outside the range of 1000 mg/L to 5000 mg/L, a concentration step of concentrating the oil-containing waste liquid or a dilution step of diluting the oil-containing waste liquid is provided at a stage before the extraction step.

More specifically, examples of the oil-containing waste liquid include a waste liquid from parts manufacturing factories for automobiles or the like containing mineral oil, a waste liquid from paper pulp factories containing turpentine oil, and a waste liquid from oil refineries, food and beverage factories, or food service industry businesses containing animal and vegetable oils.

The oil-containing waste liquid may be an organic matter-containing waste liquid extracted into a non-polar solvent.

In FIG. 1, the oil-containing waste liquid is introduced into a membrane separation device 2 via piping 1, and is concentrated to the aforementioned oil concentration by membrane separation. Part of the permeate that has passed through the membrane is returned to the membrane separation device 2 from piping 4A. The remainder of the permeate is sent to wastewater treatment equipment (not shown) via piping 4B and is treated.

The concentrate from the membrane separation device 2 and the extraction solvent are supplied to a mixing unit 6a of an extraction device 6 via piping 5 and piping 7 at the aforementioned solvent/waste liquid ratio.

The concentrate and extraction solvent supplied to the mixing unit 6a are mixed in the mixing unit 6a, and the oil in the concentrate is incorporated into the solvent. That is, the oil in the concentrate dissolves into the extraction solvent. The solvent in which the oil has dissolved and the concentrate (residual liquid) from which the oil has been extracted are naturally separated (specific gravity separation) in a separation unit 6b, and the solvent in which the oil has dissolved is supplied to the cold heat source flow path of a heat exchanger 9 via piping 8.

This solvent in which the oil has dissolved exchanges heat with the solvent vapor flowing through the cooling fluid flow path, is heated, and is introduced into a distillation tower 11 via piping 10.

In the distillation tower 11, the solvent (n-hexane) having a lower boiling point than the oil flows toward the tower top side, and the oil having a higher boiling point flows toward the tower bottom side.

The solvent vapor is supplied from the distillation tower 11 to the cooling fluid flow path of the heat exchanger 9 via piping 12, exchanges heat with the extraction device effluent (lowtemperature liquid) flowing through the cold heat source flow path to be cooled, and becomes a liquid solvent. This liquid solvent is sent to the mixing unit 6a of the extraction device 6 via piping 7, and is reused as extraction solvent.

The solvent that is lost by migrating into the treated water described later or by volatilizing from the device is newly supplied from outside the system.

From the tower bottom of the distillation tower 11, the separated oil is extracted via piping 14. This oil is used as recovered oil for power generation and various other applications as liquid fuel or combustion aid. If required, the recovered oil may be subjected to further treatment.

From the separation unit 6b of the extraction device 6, the residual liquid from which oil has been extracted is extracted via piping 20. This residual liquid is sent to a membrane separation device 21 such as a reverse osmosis membrane separation device, and the solvent component (residual solvent) in the residual liquid is concentrated by membrane separation.

The permeate that has passed through a membrane 21a of the membrane separation device 21 is extracted as treated water via piping 22. The concentrate of the membrane separation device 21 is discharged via piping 23, and sent to a waste liquid treatment process (not shown) for concentration treatment or wastewater treatment.

In the above embodiment, the oil-containing waste liquid is subjected to membrane separation treatment in the membrane separation device 2 to increase the oil concentration, but for oil that can be easily separated from water, separation treatment may be performed with an oil-water separator using specific gravity difference or micro air, and then the liquid may be sent to the extraction device 6 immediately thereafter or after performing separation treatment such as membrane separation treatment as required.

The extraction device 6 may be continuous type or batch type. Examples of continuous liquid-liquid extraction devices used on an industrial scale include mixer-settler type, spray tower, countercurrent contact tower, perforated plate tower (sieve plate tower), and the like. The extraction device may be any of these or other types.

Since n-hexane (boiling point 67°C), which has a lower boiling point than the boiling point of the oil to be separated (about 250°C to 600°C), is used as the extraction solvent in the present invention, even in the case of separating oil from an oil-containing solvent by extraction using heated distillation, it is more energetically advantageous than directly distilling the oil-containing waste liquid.

In FIG. 1, the solvent is regenerated by separating oil from the oil-containing solvent using heated distillation. Heated distillation using the boiling point difference between oil and solvent in this manner is suitable for solvent regeneration. Both batch distillation and continuous distillation are applicable as methods for heated distillation, and methods such as flash distillation, tray tower, and packed tower are applicable.

Vacuum distillation may be performed in addition to heated distillation, as a method for separating oil from the oil-containing solvent.

As described above, in the present invention, the oil concentration in the oil-containing waste liquid supplied for extraction is 1000 mg/L to 5000 mg/L. Therefore, in the case of the oil concentration of the oil-containing waste liquid being lower than the above range, the oil-containing waste liquid is concentrated by a gravity separation, pressurized flotation, membrane separation device, or other concentration means prior to the extraction treatment.

On the other hand, in the case of the oil concentration in the oil-containing waste liquid supplied for extraction being higher than the above range, the oil-containing waste liquid is diluted by providing a dilution mixing tank or the like for diluting the oil-containing waste liquid with industrial water, tap water, wastewater from a system other than the target oil-containing wastewater, drain water, or the like.

To promote separation of oil from the oil-containing waste liquid, salt such as sodium chloride, alkali, or acid may be added to the oil-containing waste liquid prior to the extraction treatment.

For example, in the case of sodium chloride, the separation efficiency of oil can be enhanced by adding about 0.1 mass% to 30 mass% of sodium chloride to an oil-containing waste liquid containing about 0.05 mass% to 1 mass% of oil, or by lowering the pH to about 2.

The oil concentration of the solvent after extracting oil from the oil-containing waste liquid is set to 4 mass% or more, as described above. Therefore, in the case of performing extraction using n-hexane according to the present invention, the oil concentration of n-hexane after extraction is 4 mass% or more, preferably 4 mass% to 12 mass%, and more preferably 4 mass% to 7 mass%, whereby oil separation efficiency and thermal energy efficiency in solvent regeneration can be enhanced.

In FIG. 1, the membrane separation device 21 separates residual substances in the waste liquid (residual liquid) after oil separation by applying membrane separation treatment such as reverse osmosis membrane, but adsorption treatment such as activated carbon may be applied to separate the solvent component in the waste liquid (residual liquid) after oil separation. Further, the residual solvent may be decomposed by oxidant addition or biological treatment.

### Examples

The following experimental examples are provided in place of examples to show the effects of the present invention.

### [Experimental Example 1]

Assuming that the wastewater used for cleaning dairy products was the oil-containing waste liquid, milk (milk fat content 3.5 mass%, non-fat milk solids 8.4 mass%, moisture 88.1 mass%) was diluted with pure water to prepare a simulated oil-containing waste liquid, and oil extraction experiments using n-hexane were conducted.

Milk, pure water, and n-hexane were put into a 2000 mL flask with lid, and extraction operation was performed by horizontal shaking at 180 rpm for 30 minutes, and then the mixture was put into a separatory funnel and allowed to stand for 30 minutes to separate the n-hexane phase and aqueous phase. The transparent portion of the n-hexane phase was collected, n-hexane was evaporated in a constant temperature bath at 80°C, and the weight of the remaining residue was measured.

There were cases where the n-hexane phase was almost entirely emulsion with no transparent portion (poor separation), and in such cases, centrifugal separation (3000 rpm, 10 minutes) was performed to collect the transparent portion. The results are shown in Table 3.

The maximum extraction concentration in Table 3 is a concentration assuming that all oil (milk fat) in the sample (milk diluted with pure water) was extracted into the n-hexane used for extraction, and the extraction rate is a value with this concentration as the denominator and the actual extraction concentration as the numerator.

In addition, the criteria for judging separation are as follows.

### <Separation>

∘: Good separation
△: Separable
×: Non-separable

**[Table 3]**

| 20 Table 3 Test Result | | | | | | | | | |
|---|---|---|---|---|---|---|---|---|---|
| No. | Solvent/waste liquid ratio (V/V) | n-hexane (mL) | Diluted milk (mL) | Oil concentration in sample (mg/L) | Maximum extraction concentration (%W/W) | Extraction concentration (oil concentration in n-hexane) (%W/W) | Extraction rate (%W/W) | Separation | Remarks |
| 1 | 0.1 | 110 | 1100 | 750 | 1.1 | 0.3 | 24.2 | ○ | Comparative Example |
| 2 | 0.1 | 110 | 1100 | 1240 | 1.9 | 0.3 | 17.0 | ○ | Comparative Example |
| 3 | 0.1 | 110 | 1100 | 2500 | 3.7 | 0.9 | 24.2 | ○ | Comparative Example |
| 4 | 0.1 | 110 | 1100 | 5000 | 7.5 | 2.8 | 37.8 | △ | Comparative Example |
| 5 | 0.1 | 110 | 1100 | 8750 | 13.1 | 1.2 | 9.5 | △ | Comparative Example |
| 6 | 0.1 | 30 | 300 | 20000 | 29.9 | 2.4 | 8.1 | △ | Comparative Example |
| 7 | 0.1 | 30 | 300 | 35000 | 52.2 | 2.3 | 4.3 | △ | Comparative Example |
| 8 | 0.05 | 60 | 1200 | 750 | 2.2 | 0.5 | 21.8 | ○ | Comparative Example |
| 9 | 0.05 | 60 | 1200 | 1240 | 3.7 | 0.7 | 19.4 | ○ | Comparative Example |
| 10 | 0.05 | 60 | 1200 | 2500 | 7.5 | 2.0 | 27.4 | ○ | Comparative Example |
| 11 | 0.05 | 60 | 1200 | 5000 | 14.9 | 5.2 | 34.9 | △ | Example |
| 12 | 0.05 | 60 | 1200 | 8750 | 26.1 | 2.2 | 8.2 | △ | Comparative Example |
| 13 | 0.025 | 30 | 1200 | 750 | 4.5 | 1.1 | 24.7 | ○ | Comparative Example |
| 14 | 0.025 | 30 | 1200 | 1240 | 7.4 | 4.0 | 54.6 | ○ | Example |
| 15 | 0.025 | 30 | 1200 | 2500 | 14.9 | 10.2 | 68.3 | △ | Example |
| 16 | 0.025 | 30 | 1200 | 5000 | 29.9 | 7.5 | 25.0 | △ | Example |
| 17 | 0.025 | 30 | 1200 | 8750 | 52.2 | 3.5 | 6.6 | △ | Comparative Example |
| 18 | 0.01 | 12 | 1200 | 750 | 11.2 | 3.4 | 30.4 | ○ | Comparative Example |
| 19 | 0.01 | 12 | 1200 | 1240 | 18.5 | 4.2 | 22.7 | ○ | Example |
| 20 | 0.01 | 12 | 1200 | 2500 | 37.3 | 10.3 | 15.3 | △ | Example |
| 21 | 0.01 | 12 | 1200 | 5000 | 74.6 | 7.8 | 11.7 | △ | Example |
| 22 | 0.01 | 12 | 1200 | 8750 | 130.6 | - | - | × | Comparative Example |

The following can be understood from Table 3.

As the solvent/waste liquid ratio becomes smaller, and furthermore, as the oil concentration in the sample becomes larger, the separation tends to deteriorate, and in the case of a solvent/waste liquid ratio of 0.01, separation becomes impossible with the oil concentration in the sample exceeding 5000 mg/L and reaching 8750 mg/L.

On the other hand, the oil concentration in n-hexane (extraction concentration) does not reach the concentration of 4 mass% determined by the aforementioned energy balance in the case of a large solvent/waste liquid ratio, but it can be understood that this can be satisfied by reducing the solvent/waste liquid ratio.

That is, it can be understood that there are appropriate oil concentration in the oil-containing waste liquid, solvent/waste liquid ratio, and extraction concentration in solvent extraction of oil from an oil-containing waste liquid using n-hexane.

Although the present invention has been described in detail using specific embodiments, it is apparent to those skilled in the art that various modifications are possible without departing from the intent and scope of the present invention.

The present application is based on Japanese Patent Application No. 2023-197548 filed on November 21, 2023, which is incorporated by reference in its entirety.

### Description of Reference Numerals

2, 21 membrane separation device
6 extraction device
11 distillation tower

## Claims

1. A method for recovering oil from an oil-containing waste liquid, the method comprising:
an extraction step of transferring oil in the oil-containing waste liquid to a solvent by performing extraction treatment on the oil-containing waste liquid with the solvent;
a separation step of separating the solvent containing the extracted oil from the waste liquid; and
an oil recovery step of separating and recovering oil from the separated solvent containing oil,
wherein the solvent is n-hexane,
an oil concentration in the oil-containing waste liquid supplied to the extraction step is 1000 mg/L to 5000 mg/L,
a volume ratio of the solvent to the oil-containing waste liquid (solvent/waste liquid ratio) is 0.01 to 0.05, and
an oil concentration in the solvent containing oil, which has been separated in the separation step, is 4 mass% or more.

2. The method for recovering oil from an oil-containing waste liquid according to claim 1, wherein in the oil recovery step, the oil is separated from the solvent containing oil by heated distillation to recover the solvent, and the recovered solvent is reused in the extraction step.

3. The method for recovering oil from an oil-containing waste liquid according to claim 2, wherein in separation by heated distillation, heat possessed by the separated solvent or oil is used for heating the solvent containing oil using a heat exchanger or a heat pump.

4. The method for recovering oil from an oil-containing waste liquid according to claim 1 or 2, further comprising a concentration step of concentrating the oil-containing waste liquid or a dilution step of diluting the oil-containing waste liquid prior to the extraction step.

5. The method for recovering oil from an oil-containing waste liquid according to claim 1 or 2, wherein the oil-containing waste liquid is any one of a waste liquid from a parts manufacturing factory for automobiles containing mineral oil, an aqueous cutting waste liquid, a waste liquid from a papermaking or paper pulp factory containing turpentine oil, and a waste liquid from an oil refinery, a food and beverage factory, or a food service industry business containing animal and vegetable oils.

6. A device for recovering oil from an oil-containing waste liquid, the device comprising:
extraction means for transferring oil in the oil-containing waste liquid to a solvent by performing extraction treatment on the oil-containing waste liquid with the solvent;
separation means for separating the solvent containing the extracted oil from the waste liquid; and
oil recovery means for separating and recovering oil from the separated solvent containing oil,
wherein the solvent is n-hexane,
an oil concentration in the oil-containing waste liquid supplied to the extraction means is 1000 mg/L to 5000 mg/L,
a volume ratio of the solvent to the oil-containing waste liquid (solvent/waste liquid ratio) is 0.01 to 0.05, and
an oil concentration in the solvent containing oil, which has been separated by the separation means, is 4 mass% or more.

7. The device for recovering oil from an oil-containing waste liquid according to claim 6, wherein the oil recovery means is means for separating the oil from the solvent containing oil by heated distillation, and
the device comprises liquid supply means for supplying the solvent from which oil has been separated by the oil recovery means to the extraction means.

8. The device for recovering oil from an oil-containing waste liquid according to claim 7, comprising a heat exchanger or a heat pump for heating the solvent containing oil using heat possessed by the solvent or the oil separated by the heated distillation.

9. The device for recovering oil from an oil-containing waste liquid according to claim 6 or 7, further comprising concentration means for concentrating the oil-containing waste liquid or dilution means for diluting the oil-containing waste liquid at a stage before the extraction means.

10. The device for recovering oil from an oil-containing waste liquid according to claim 6 or 7, wherein the oil-containing waste liquid is any one of a waste liquid from a parts manufacturing factory for automobiles containing mineral oil, an aqueous cutting waste liquid, a waste liquid from a papermaking or paper pulp factory containing turpentine oil, and a waste liquid from an oil refinery, a food and beverage factory, or a food service industry business containing animal and vegetable oils.
